# EUROPEAN PATENT APPLICATION

(11) **EP 0 657 242 A1**
(43) Date of publication of application: **14.06.1995**
(21) Application number: 94917793.5
(22) Date of filing: 09.06.1994
(51) Int. Cl.: B23H 1/02, B23H 7/04

(54) **DISCHARGE DEVICE OF WIRE-CUTTING ELECTRIC DISCHARGE MACHINE**

(30) Priority: 24.06.1993 JP 177419/93
(71) Applicant: FANUC LTD., Minamitsuru-gun, Yamanashi 401-05 (JP)
(72) Inventor: Izumiya,Syunzo, Kitatsuru-gun, Yamanashi 409-01 (JP); KAWAHARA, Akiyoshi Rm 6-110 Fanuc Manshonharimomi, Yamanashi 401-05 (JP)
(74) Representative: Billington, Lawrence Emlyn
(86) International application number: JP9400940
(87) International publication number: WO9500278

(57) **Abstract**

An insulation detection circuit (7) senses the insulation between a wire electrode (5) and a work (6) while a machining discharge switching element (3) is on until the element (3) is turned off during or after the capacitor (4) of a power source circuit is charged. When the insulation is good, the switching element (3) is made to conduct and discharge for machining starts. When the insulation is not good, the switching element (3) is not made to conduct, but the charge in the capacitor is caused to flow to a release discharge circuit through a release discharging switching element (8) by turning on the switching element (8). When a current detector (10) detects that the discharge of the capacitor (4) is completed, both of the switching elements (3) and (8) are turned off.

## Description

### TECHNICAL FIELD

This invention relates to a discharge device for a wire cut electric discharge machine, and more particularly to a discharge device for a wire cut electric discharge machine which monitors an insulated state between a wire electrode and a workpiece, prohibits discharge between the wire electrode and the workpiece when the insulated state is not acceptable, and allows electric charge stored in a capacitor to flow or discharge via another electric path.

### BACKGROUND ART

A wire cut electric discharge machining is carried out by intermittently applying a voltage between a wire electrode and a workpiece to cause repetitive electric discharge between the wire electrode and the workpiece at regular intervals for execution of machining.

One cycle of such repetitive discharge operation includes a period where no electric discharging is carried out (i.e. a discharge pause period), during which the wire electrode and the workpiece are kept in an insulated state. This insulated state is broken when a discharge starts (that is, when the next cycle starts). Then, after the discharge in that cycle is finished, the next discharge pause period begins and thus the insulated state is restored at this moment between the wire electrode and the workpiece.

However, there is a possibility of failing to restore the insulated state between the wire electrode and the workpiece for some reasons when the next discharge pause period begins after finishing one discharge operation. If the next discharge is caused between the wire electrode and the workpiece under such a poor insulated state, short-circuit current will flow without contributing to machining, thus lowering the machining speed. Especially, occurrence of this kind of short-circuit current tends to concentrate on the same local point; inducing deterioration of surface machining accuracy and breaking of wire. This is why the discharge between the wire electrode and the workpiece must be immediately stopped in the event the restoration of the insulated state is insufficient.

To this end, it is necessary to surely detect whether the insulated state is restored between the wire electrode and the workpiece at the time when a discharge pause period begins after finishing one discharge period. Subsequently, if it is judged that the restoration of the insulated state is poor, a countermeasure must be taken to prevent electric discharge to be caused before the following discharge starts between the wire electrode and the workpiece.

One of prior art technologies proposes to observe electric voltage applied or electric current flowing between the wire electrode and the workpiece during the discharge period, thereby estimating restoration of the insulated state at the time when the discharge pause period begins after finishing one discharge period. If it is estimated that the restoration of insulated state is not satisfactory, a countermeasure is taken for prohibiting the following discharge.

Furthermore, another prior art technology discloses a means for detecting the restoration of insulated state between the wire electrode and the workpiece, which includes an independent electric power source other than an electric power source for electric discharge machining. This independent electric power source applies an electric voltage between the wire electrode and the workpiece, so that the detecting means starts its operation during the discharge pause period to observe the voltage caused between the wire electrode and the workpiece. Thus, the restoration of insulated state during the discharge pause period is judged on the basis of the observed voltage value.

However, the former conventional technology is disadvantageous in that it cannot detect an actual insulated state during a period after finishing discharge (i.e. the discharge pause period), therefore it esteems an insulated state on the basis of the previous discharge current or discharge voltage. Thus, a problem of detecting accuracy will arise. Furthermore, it is necessary to actually carry out discharging operation under the poor insulated state for esteeming insufficiency of restoration of the insulation during the following discharge pause period on the basis of the data obtained by that discharging operation. Accordingly, it is impossible for the former conventional technology to immediately prohibit the following discharge in the event the restoration of insulated state is insufficient during the discharge pause period.

On the other hand, the latter conventional technology inevitably requires to provide a special electric power source and its appending circuits for monitoring the insulated state between the wire electrode and the workpiece. This will result in cost increase.

To solve such problems encountered in the prior art, the inventors of this application have invented a novel device for detecting an insulated state between a wire electrode and a workpiece, and filed a patent application with the Japanese Patent Office (the Japanese Patent Application Serial No. 4-170125; laid open as Kokai No. 5-337738). Furthermore, a PCT application has been later filed based on the above Japanese Patent Application (Application No. PCT/JP93/00692 corresponding to International Publication No. WO93/24265). This novel insulated state detecting device makes it possible to observe an electric voltage caused between the wire electrode and the workpiece even during the discharge pause period, without applying an electric voltage between the wire electrode and the workpiece through a special electric power source thereby realizing an accurate judgement of restoration of insulated state during the discharge pause period.

More specifically, the invention of the above application was made based on the knowledge that although connection between a capacitor and a wire electrode or a workpiece is kept cut off during a discharge pause period due to turning-off state of the semiconductor switching element, electric energy from machining power source is actually fed slightly between the wire electrode and the workpiece. In other words, if a voltage between the wire electrode and the workpiece is observed during the discharge pause period, a significant amount voltage can be detected even if the discharge switching element is opened. If insulated state is induced between the wire electrode and the workpiece, then a higher voltage is observed. Instead, if insufficient insulated state is induced between the wire electrode and the workpiece, a lower voltage is observed. The invention of the above application utilizes this phenomenon. Since the device proposed in the above application is incorporated into the embodiments of the present invention, its details will be explained in the following explanation of the preferred embodiments of the present invention.

### DISCLOSURE OF INVENTION

Accordingly, an object of the present invention is to provide a discharge device for a wire cut electric discharge machine which monitors an insulated state between a wire electrode and a workpiece during a discharge pause period by measuring an electric voltage induced therebetween during that period, prohibits discharge between the wire electrode and the workpiece when it is judged that the insulated state during the discharge pause period is insufficient, and allows electric charge stored in a capacitor to flow or discharge via another electric path. Specifically, the present invention is based on the above-described apparatus for detecting an insulated state between the wire electrode and the workpiece proposed in the above-described prior application, and is materialized by adding to the above apparatus a discharge control means for allowing or prohibiting the next-coming discharge to be generated between the wire electrode and the workpiece on the basis of the detected result of insulated state, obtained by the above apparatus, during the discharge pause period thereby providing an improved discharge device for a wire cut electric discharge machine.

In order to accomplish this and other related objects, the present invention provides a discharge device for a wire cut electric discharge machine comprising:
an electric power source circuit including a machining power source, a capacitor for applying a voltage between a wire electrode and a workpiece, and a charge switching element interposed between said machining power source and said capacitor;
a machining discharge circuit including the wire electrode, the workpiece, and a machining discharge switching element interposed between said wire electrode or said workpiece;
a by-pass discharge circuit including a by-pass discharge switching element and connected in parallel with said machining discharge circuit;
a capacitor discharge termination detecting device which generates discharge termination signal when it sensed the termination of discharge by detecting the value of current to be discharged from said capacitor;
an insulated state detecting device for detecting an insulated state between said wire electrode and said workpiece during a predetermined time within a period ranging from the time of switchover of said charge switching means from open to close state to the time of subsequent switchover of said machining discharge switching means from open to close state, and generating a good/bad insulation signal on the basis of a detection result; and
a discharge path selecting mechanism which generates an operational signal for opening any one of said machining discharge switching element and said by-pass discharge switching element and closes the other on the basis of said good/bad insulation signal generated from said insulated state detecting device, and further generates another operational signal for opening both said machining discharge switching element and said by-pass discharge switching element in response to said discharge termination signal generated from said capacitor discharge termination detecting device.

It is preferable in the above discharge device that the machining discharge switching element is composed of a semiconductor, and said insulated state detecting device measures a value of a voltage between said wire electrode and said workpiece, capable of being detected even if said machining discharge switching element is in an open state so as to be disconnected with said machining power source or even if not supplied with any electric power from another power unit specially provided, and outputs a good/bad insulation signal based on whether or not a voltage value measured exceeds a predetermined value.

### BRIEF DESCRIPTION OF DRAWINGS

Fig. 1 is a block diagram showing essential components of a preferred embodiment of the present invention;
Fig. 2 is a circuit diagram showing a device for detecting an insulated state between a wire electrode and a workpiece, employed in the embodiment shown in Fig. 1;
Fig. 3 is a circuit diagram showing a discharge path selecting circuit which receives an output signal generated from the insulated state detecting device of Fig. 2 and generates a control signal for selectively discharging electric charge stored in a capacitor either between the wire electrode and the workpiece or between other components; and
Fig. 4 is a timing chart illustrating operations of various portions constituting the above embodiment.

### BEST MODE FOR CARRYING OUT THE INVENTION

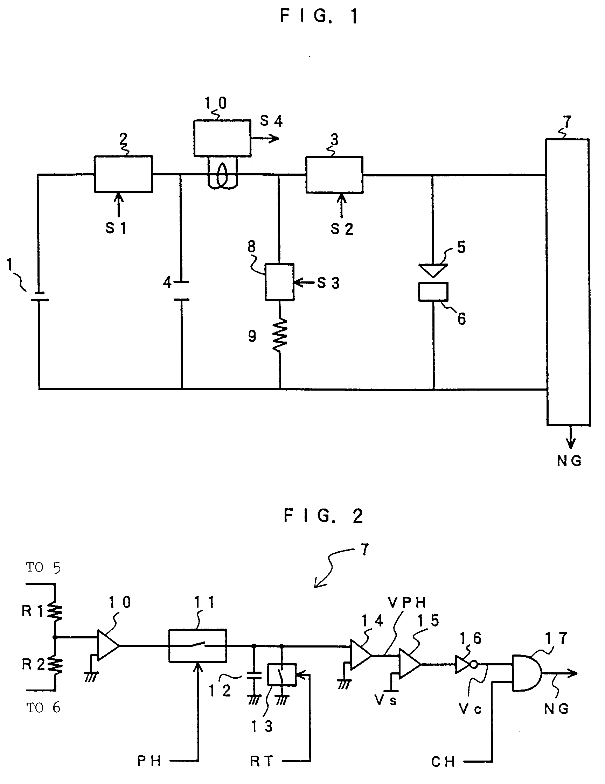

Fig. 1 is a block diagram showing essential components of a preferred embodiment of the present invention. A capacitor 4 is connected to a machining power source 1 through a charge switching element 2. Both ends of the capacitor 4 are connected to a wire electrode 5 and a workpiece 6 through a discharge switching element 3. The charge switching element 2 is turned on when it receives a charge start signal S1 from a control unit (not shown) of a wire cut electric discharge machine. The discharge switching element 3 is turned on when it receives a discharge start signal S2 from the control unit.

An insulated state detecting device 7, connected between both ends of the wire electrode 5 and the workpiece 6, detects an insulated state between the wire electrode 5 and the workpiece 6. The insulated state detecting device 7, as described in detail later, detects an insulated state (more specifically, the state of insulation restoration) between the wire electrode 5 and the workpiece 6 immediately before a discharge operation starts. If a poor insulated state is detected, the insulated state detecting device 7 generates an bad insulation signal NG which is sent to the control unit.

The above-explained arrangement is so far identical with the device disclosed in the above-described prior application mentioned in the "Background Art".

The present invention further includes an electric current detecting device 10 disposed in a path connecting one end of the capacitor 4 and one end of the discharge switching element 3. This electric current detecting device 10 senses the termination of discharge by monitoring discharging current flowing from the capacitor to the gap between the wire electrode 5 and the workpiece 6 through the discharge switching element 3 when electric charge stored in the capacitor discharges. Responding to the termination of discharge, the electric current detecting device 10 generates a signal S4.

Furthermore, the present invention includes a serial joint composed of a by-pass discharge switching element 8 and a resistant element 9, connected at one end to a connecting point of the electric current detecting device 10 and the discharge switching element 3 and connected at the other end to an opposite end of the capacitor 4 (i.e. an end opposing to the end connected to the electric current detecting device 10), thereby establishing a by-pass discharge circuit. This by-pass discharge switching element 8 is turned on when it receives a signal S3 (a by-pass discharge signal) from the control unit. The activation of the by-pass discharge switching element 8 allows electric charge stored in the capacitor 4 to flow through the resistant element 9 via this switching element 8. Thus, it is prevented that electric current flows through the wire electrode 5 and the workpiece 6. An electric current value flowing through the by-pass discharge circuit can be adjusted by varying a resistant value of the resistant element 9.

The above-described switching elements 2, 3 and 8 would be, for example, a semiconductor element such as an FET.

This embodiment of the present invention uses the same insulated state detecting device 7 as the device disclosed in the prior patent application which is mentioned in the "Background Art". However, the present invention allows to use other conventional means for detecting insulated state as long as it can judge whether the insulated state between the wire electrode 5 and the workpiece 6 is good or poor during a charging period of the capacitor or during a period from termination of the charging period to turning-on of the discharge switching element. For example, as described in the conventional art technology, an independent power source other than the processing power source can be provided to apply an electric voltage between the wire electrode and the workpiece, thereby observing the magnitude of electric voltage during a discharge pause period, i.e. during the charging period of the capacitor or during the period from termination of the charging period to turning-on of the discharge switching element. A judgement is made on the basis of a voltage value thus detected as to whether or not the insulated state between the wire electrode 5 and the workpiece 6 is good or poor. Thus, if a poor insulated state is detected, the no-good signal NG can be generated.

Hereinafter, the insulated state detecting device 7 for detecting an insulated state between the wire electrode and the workpiece, disclosed in the above prior patent application and used in the present invention, will be explained with reference to Fig. 2.

A voltage Vg between the wire electrode 5 and the workpiece 6 is divided with a ratio determined by two resistances R1 and R2, and the divided voltage is taken out to be amplified by a buffer amplifier 10. An output of the buffer amplifier 10 is inputted into a peak hold circuit comprising a peak hold switching element 11 and a capacitor 12. An output of the peak hold circuit is amplified in a buffer amplifier 14. An output of the buffer amplifier 14, VPH (i.e. a peak hold voltage), is fed into one input terminal of a comparator 15.

The other terminal of the comparator 15 receives a reference voltage Vs having a predetermined set value. An output of the comparator 15 is inverted with an invertor 16 to generate a Vc which is subsequently inputted into an AND circuit 17. The AND circuit 17 outputs the bad insulation signal NG only when it receives both the output of the invertor 16 and an output of a check pulse CH simultaneously.

A reference numeral 13 represents a switching circuit which turns on in response to a reset signal RT to discharge electric charge of the capacitor 12. A peak hold signal PH is inputted to the peak hold switching element 11 synchronously with the charge start signal S1 of the capacitor 4 supplied from the control unit. When this signal PH is supplied, the switching element 11 is turned on. (This peak hold signal PH would be generally required to activate the peak hold switching element 11 during a deactivation period of the discharge switching element 3 including a charging period of the capacitor 4 in response to turning-on of the charge switching element 2.)

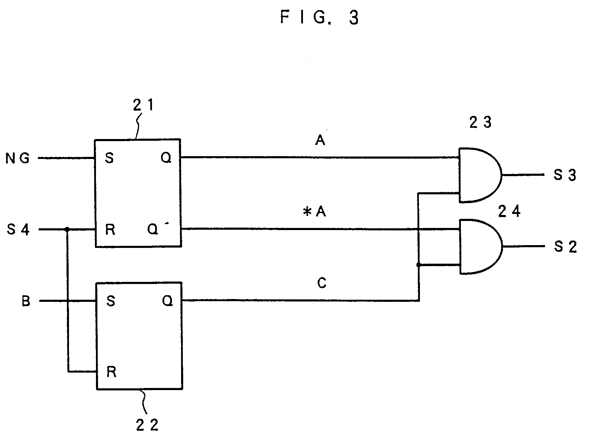

Next, a discharge path selecting circuit will be explained with reference to Fig. 3. The discharge path selecting circuit turns off the machining discharge switching element in the event that the bad insulation signal NG is outputted from the insulated state detecting device 7, preventing electric charge stored in the capacitor 4 from flowing between the wire electrode 5 and the workpiece 6, and instead allowing the electric charge to discharge through a by-pass discharge circuit comprising the by-pass discharge switching element 8 and the resistant element 9.

This mechanism consists of first and second flip-flop circuits 21, 22 and first and second AND circuits 23, 24. The first flip-flop circuit 21 has an S terminal receiving the NG signal (i.e. bad insulation signal) outputted from the insulated state detecting device 7, and a R terminal receiving the S4 signal (i.e. discharge termination signal) outputted from the electric current detecting device 10. Accordingly, the first flip-flop circuit 21 is set by the bad insulation signal NG and reset by the discharge termination signal S4. During a period from set to reset, the first flip-flop circuit 21 continuously outputs a signal A (i.e. by-pass discharge path establishing signal) from its Q terminal. (By the way, as explained with reference to Fig. 2, the bad insulation signal NG is outputted during a period the peak hold signal PH is turned on in the circuit of Fig. 2, i.e. during a deactivation period of the discharge switching element 3 including a charging period of the capacitor 4 in response to turning-on of the charge switching element 2). Meanwhile, an output of a reversal Q terminal, i.e. a Q' terminal, is maintained at a reversal signal *A ( Symbol "*" represents a reverse logic here).

The second flip-flop circuit 22 has an S terminal receiving the charge termination signal B (which is outputted a predetermined time later after the switching element S1 is switched from "close" to "open") and a R terminal receiving the S4 signal (i.e. a discharge termination signal) outputted from the electric current detecting device 10. Accordingly, the second flip-flop circuit 22 is set by the charge termination signal B and reset by the discharge termination signal S4. During a period from set to reset, the second flip-flop circuit 22 continuously outputs a discharge allowing signal C from its Q terminal.

The first AND circuit 23 outputs a signal S3 (i.e. a signal for activating the by-pass discharge switching element 8 constituting a part of the by-pass discharge circuit) only when it receives both the by-pass discharge path establishing signal A from the first flip-flop circuit 21 and the discharge allowing signal C from the second flip-flop circuit 22 simultaneously.

The second AND circuit 24 generates a signal S2 (i.e. a machining discharge execution signal) only when it receives both the *A signal (i.e. a signal indicating a good insulated state) from the first flip-flop circuit 21 and the discharge allowing signal C from the second flip-flop circuit 22 simultaneously, thereby turning on the machining discharge switching element 3. In response to this turning-on of the switching element 3, electric charge stored in the capacitor 4 is supplied to a gap between the wire electrode 5 and the workpiece 6 to generate discharge for an ordinary machining.

As explained above, the monitoring about whether or not the insulated state between the wire electrode 5 and the workpiece 6 is normal (i.e. whether or not the insulated state is sufficiently restored from insulation breakdown followed by preceding discharge) is carried out before the next discharge is taken place between the wire electrode 5 and the workpiece 6 in response to a closing of the switching element 3. If the insulated state is normal, the signal S2 is outputted without forming the by-pass discharge circuit (i.e. without outputting the signal S3 to close the by-pass discharge switching element 8), thereby closing the machining discharge switching element 3 to execute an ordinary electric discharge machining.

In a process where electric charge stored in the capacitor 4 is discharged through a gap between the wire electrode 5 and the workpiece 6, the electric current detecting device 10 detects its discharge current. Thus, the termination of discharge can be detected by the electric current detecting device 10. More specifically, when the machining discharge from the capacitor 4 is finished, the electric current detecting device 10 outputs the discharge termination signal S4 to reset the first and second flip-flop circuits 21 and 22.

On the other hand, if an abnormal insulated state is detected between the wire electrode 5 and the workpiece 6, the signal S3 is outputted without generating the signal S2 (i.e. without causing discharge between the wire electrode 5 and the workpiece 6), thereby closing the by-pass discharge switching element 8 to form the by-pass discharge circuit. Thus, electric charge stored in the capacitor 4 is discharged through the by-pass discharge path thus formed.

In a process where electric charge stored in the capacitor 4 is discharged through the dy-pass discharge switching element 8 of the by-pass discharge circuit, the electric current detecting device 10 detects this discharge current. Thus, the termination of discharge can be detected by the electric current detecting device 10. More specifically, when the by-pass discharge from the capacitor 4 is finished, the electric current detecting device 10 outputs the discharge termination signal S4 to reset the first and second flip-flop circuits 21 and 22.

In short, the electric current detecting device 10 outputs signal S4 upon termination of the discharge of electric charge stored in the capacitor 4, based on either machining discharge or by-pass discharge. Thus, both the machining discharge switching element 3 and the by-pass discharge switching element 8 are opened. Therefore, it becomes possible to prepare for the succeeding charging operation of the capacitor in the next cycle.

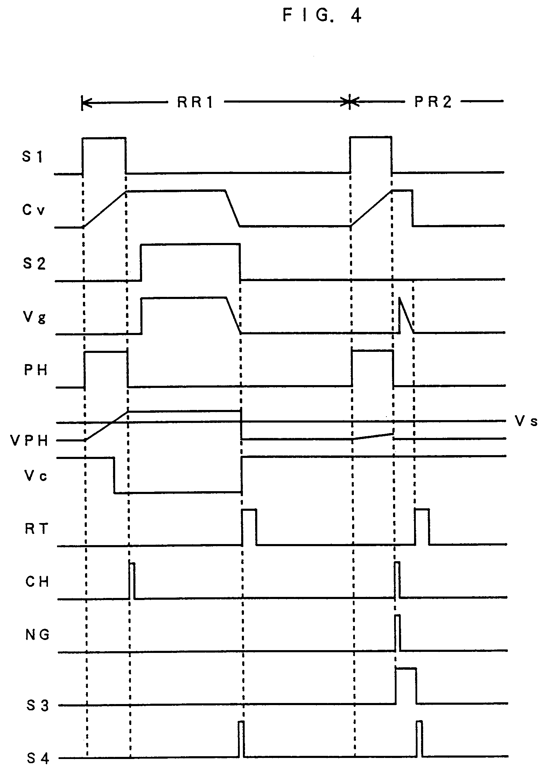

Hereinafter, an operation of the electric power source for the wire electric discharge machine including the above-described insulated state detecting device 7 will be explained with reference to the timing chart of Fig. 4.

For convenience of explanation, it is assumed that the insulated state is good in a first period PR1 illustrated in the left region of the drawing, while a poor insulated state is detected in a second period PR2 illustrated in the right region.

First explained is an operation of the first period PR1 where the insulated state detecting device 7 does not output the bad insulation signal NG.

Upon receiving charge start signal S1 from the control unit, the switching element 2 is turned conductive to start the charging of the capacitor 4. At the same time, the peak hold switching element 11 in the insulated state detecting device 7 is turned conductive in response to peak hold signal PH supplied to the control terminal of the peak hold switching element 11. Meanwhile, a divided voltage of the gap voltage Vg between the wire electrode 5 and the workpiece is applied to the capacitor 12 through the buffer amplifier 10; thus, the charging of the capacitor 12 is initiated. (The charging voltage Cv starts increasing.)

It should be noted that the discharge switching element 3 is in an OFF (non-conductive) condition during the charge operation of the capacitor 4 and, therefore, the voltage of the capacitor 4 is not applied to the gap between the wire electrode and the workpiece. Thus, it is considered that no voltage (i.e. the gap voltage Vg) is caused between the wire electrode and the workpiece. However, as described above, the fact proved by the experimental results is that a significant voltage is caused between the wire electrode and the workpiece even such a condition.

Although it has not been made clear completely why such a phenomenon arises, that this phenomenon is belived to be caused by the combination of a potential capacitance of the circuit including switching elements and leakage current brought about by constituting the discharge switching element 3 with semiconductor elements such as FET (That is, although an operational state of the switching element is in "non-conductive", a perfect insulated state can not always be realized).

Although not adopted in this embodiment, another small-capacitance capacitor element can be interposed in parallel between input and output terminals of the discharge semiconductor switching element 3 such as an FET to attain the similar effect. In such a case, leakage current brought about by both this capacitor element and the semiconductor switching element can be utilized.

Thus, when the insulation between the wire electrode 5 and the workpiece 6 is sufficient, a voltage caused between the wire electrode 5 and the workpiece 6 is relatively high. The charging voltage Cv of the capacitor 12 is correspondingly high, and also the peak hold voltage VPH amplified by the buffer amplifier 14 is high. If this peak hold value VPH exceeds the reference voltage Vs what has been set in the comparator 15, signal Vc which is obtained by inverting an output of the comparator 15 through the invertor 16 becomes LOW level.

Immediately after the peak hold signal PH is terminated, check pulse CH is generated from the control unit. The AND circuit 17 produces a logical product of signal Vc and check pulse CH. Signal Vc is in a LOW level when the insulated state between the wire electrode 5 and the workpiece 6 is sufficient; accordingly, the AND circuit 17 does not produce a bad insulation signal NG. Thereafter, electric charge stored in the capacitor 12 is discharged in response to the reset signal RT. Hence, there is no chance of generating the signal NG until the capacitor 4 is next charged.

Accordingly, the flip-flop circuit 21 maintains a reset condition during this period. The AND circuit 23 never outputs by-pass discharge signal S3. On the other hand, C signal produced from the Q terminal of the flip-flop circuit 22 is in an OFF state until the charge termination signal B is inputted a predetermined time later after the charge start signal S1 is terminated. Thus, the AND circuit 24 never outputs S2 signal.

When the flip-flop circuit 22 is set in response to the charge termination signal B, the flip-flop circuit 22 produces discharge allowing signal C from its Q terminal, which is then supplied to one input terminal of respective AND circuits 23 and 24. Since the other terminal of the AND circuit 23 is in an OFF state (a state not detecting bad insulation) as described above, the signal S3 is not outputted.

However, as the other terminal of the AND circuit 24 is connected to the reversal output terminal Q' of the flip-flop circuit 21, the AND circuit 24 keeps an ON state. Accordingly, it outputs the signal S2 as soon as it receives the discharge allowing signal C, thereby turning on the switching element 3 to supply an ordinary discharge current between the wire electrode 5 and the workpiece 6 for executing the electric discharge machining.

When the electric charge stored in the capacitor 4 is discharged so much that the discharge current decreases below a predetermined value, the electric current detecting device 10 detects this and outputs discharge termination signal S4. This discharge termination signal S4 is supplied to the R terminal of the flip-flop circuit 21 and the S terminal of the flip-flop circuit 22 to immediately reset the flip-flop circuits 21 and 22. With this reset operation, C signal is turned off and the output S2 of the AND circuit 24 is turned off. Thus, the switching element 3 is opened. Meanwhile, the AND circuit 23 is in an OFF state. At the time the discharge termination signal S4 is outputted, the switch circuit 13 of the insulated state detecting device 7 receives the reset signal RT. Thus, the electric charge of the capacitor 12 is discharged. Hereinafter, until charge start signal S1 is again supplied to the switching element 2, signal Vc is maintained at a HIGH level while other signals are maintained at a LOW level as illustrated in the timing chart of Fig. 4.

An overall operation of the embodiment apparatus of the present invention in the first period will be understood from the foregoing description. Next, an operation in the second period PR2 wherein a poor insulated state is detected will be explained.

Discharge start signal S1 is again supplied to the switching element 2 to start the charging of the capacitor 4. Meanwhile, peak hold signal PH is supplied to the control terminal of the peak hold switching element 11 in the insulated state detecting device 7 to become the switching element 11 conductive.

In the same manner as in the first period PR1, the divided voltage of a voltage applied between the wire electrode 5 and the workpiece, i.e. gap voltage Vg, is applied to the capacitor 12 through the buffer amplifier 10, thereby initiating the charging of the capacitor 12. (That is, the charging voltage Cv starts increasing). However, if the insulated state between the wire electrode 5 and the workpiece 6 is not sufficiently restored for some reasons, the gap voltage Vg (i.e. its divided voltage) is lowered. As a result, charging voltage Cv of the capacitor 12 remains at a relatively low value.

Accordingly, peak hold voltage VPH amplified through the buffer amplifier 14 becomes low. If this peak hold voltage VPH decreases below the reference voltage Vs that has been set in the comparator 15, signal Vc which is obtained by inverting an output of the comparator 15 through the invertor 16 becomes a HIGH level.

Immediately after peak hold signal PH is terminated, check pulse CH is outputted from the control unit. The AND circuit 17 produces a logic product of signal Vc and check pulse CH. NG signal, indicating that the insulated state between the wire electrode 5 and the workpiece 6 is insufficient, is outputted from the AND circuit 17 and supplied to the S terminal of the flip-flop circuit 21. Thereafter, the electric charge stored in the capacitor 12 is discharged in response to reset signal RT, in the same manner as in the first period PR1.

When the flip-flop circuit 21 is set in response to the NG signal, discharge path selecting signal A is produced from the terminal Q of the flip-flop circuit 21 and supplied to one input terminal of the AND circuit 23. This state is maintained until the flip-flop circuit 21 is reset in response to discharge termination signal S4. During this period, the output *A of the Q' terminal is maintained at a LOW level.

On the other hand, the flip-flop circuit 22 continuously outputs discharge allowing signal C from its Q terminal during a period from its set operation by charge termination signal B to its reset operation by discharge termination signal S4. Therefore, the AND circuit 23 outputs by-pass discharge signal S3 upon setting the flip-flop circuit 22 in response to charge termination signal B. Thus, the by-pass discharge switching element 8 is made conductive to start by-pass discharge operation of electric charge stored in the capacitor 4. More specifically, the by-pass discharge circuit comprising the switching element 8 and the resistant element 9 is established. This condition is maintained until the flip-flop circuit 21 is reset in response to the discharge termination signal S4 to be outputted from the current detecting device 10 in accordance with progress in by-pass discharge.

As output *A of the Q' terminal of the flip-flop circuit 21 is in a LOW level, the AND circuit 24 never outputs signal S2. Thus, the switching element 3 is kept open.

When the flip-flop circuits 21 and 22 are reset in response to signal S4 after finishing by-pass discharge, signal S3 is terminated and the switching element 8 restores in the non-conductive condition. Meanwhile, An output of the AND circuit 24 connected to the reversal output terminal of the flip-flop circuit 21 becomes a HIGH level. However, the other input (C) is in a LOW level. Therefore, the signal S2 is not outputted at this moment. In response to discharge termination signal S4, reset signal RT is supplied for a predetermined time to the switch circuit 13 of the insulated state detecting device 7, thereby discharging the electric charge of the capacitor 12. Thereafter, in the same manner as in the first period PR1, signal Vc is maintained at a HIGH level while the other signals at a LOW level as shown in Fig. 4, entering a condition for waiting the next charge start signal S1.

As explained in the foregoing description, the apparatus embodying the present invention enables to selectively carry out either a discharge between the wire electrode and the workpiece or a by-pass discharge at every operational cycle of the wire cut electric discharge machine, on the basis of the output of the insulated state detecting device for detecting the insulated state between the wire electrode and the workpiece utilizing the processing power source.

According to the above-described embodiment, the peak hold circuit of the insulated state detecting device 7 comprises the peak hold switching element 11 and the capacitor 12. Therefore, if a voltage outputted from the buffer amplifier 10 decreases after it once increased under an ON condition of the peak hold switching element 12, the peak voltage may not be always detected, although it will be no problem.

If it is required to more accurately detect the peak voltage, it will be preferable to insert a diode in a forward of forward direction (i.e. a direction of current flowing from the buffer amplifier 10 to the capacitor 12) between the peak hold switching element 11 and the capacitor 12.

As explained above, the present invention can make it sure, with a simple arrangement, to prevent a discharge between the wire electrode and the workpiece when the insulated state therebetween is poor. Furthermore, detection of the insulated state between the wire electrode and the workpiece is executed immediately before each discharge cycle is initiated. It will increase reliability to the detection result. Thus, it becomes possible to reduce a failure in selecting either execution or avoidance of the machining discharge in each operating cycle of the wire cut electric discharge machine. Still further, the by-pass discharge is immediately executed when the machining discharge is avoided. Thus, unnecessary electric charge is released, and the machining discharge circuit involving the gap between the wire electrode and the workpiece is electrically isolated from the processing power source circuit. Moreover, both the machining discharge switching element 3 and the by-pass discharge switching element 8 are kept open when the by-pass discharge is terminated in the same manner as in the case the machining discharge is terminated. Thus, no problem arises in starting the next cycle operation, i.e. charging of the capacitor.

Yet further, the circuits required for the detection of insulated state and avoidance of the inter-electrode discharge are so simple that these circuit are compatible with the ordinary discharge device for a wire cut electric discharge machine. In other words, the present invention can increase machining accuracy and work efficiency of the wire cut electric discharge machine by only adding a simple modification to the conventional discharge device for a wire cut discharge machine, without requiring a new power source unit or complicated processing circuits.

## Claims

1. A discharge device for a wire cut electric discharge machine comprising:
an electric power source circuit including a machining power source, a capacitor for applying a voltage between a wire electrode and a workpiece, and a charge switching element interposed between said machining power source and said capacitor;
a machining discharge circuit including the wire electrode, the workpiece, and a machining discharge switching element interposed between said wire electrode or said workpiece;
a by-pass discharge circuit including a by-pass discharge switching element and connected in parallel with said machining discharge circuit;
a capacitor discharge termination detecting device which generates discharge termination signal when it sensed the termination of discharge by detecting the value of current to be discharged from said capacitor;
an insulated state detecting device for detecting an insulated state between said wire electrode and said workpiece during a predetermined time within a period ranging from the time of switchover of said charge switching means from open to close state to the time of subsequent switchover of said machining discharge switching means from open to close state, and generating a good/bad insulation signal on the basis of a detection result; and
a discharge path selecting mechanism which generates an operational signal for opening any one of said machining discharge switching element and said by-pass discharge switching element and closes the other on the basis of said good/bad insulation signal generated from said insulated state detecting device, and further generates another operational signal for opening both said machining discharge switching element and said by-pass discharge switching element in response to said discharge termination signal generated from said capacitor discharge termination detecting device.

2. The discharge device for a wire cut electric discharge machine in accordance with claim 1, wherein said machining discharge switching element is composed of a semiconductor, and said insulated state detecting device measures a value of a voltage between said wire electrode and said workpiece, capable of being detected even if said machining discharge switching element is in an open state so as to be disconnected with said machining power source or even if not supplied with any electric power from another power unit specially provided, and outputs a good/bad insulation signal based on whether or not a voltage value measured exceeds a predetermined value.

3. The discharge device for a wire cut electric discharge machine in accordance with claim 2, wherein a capacitor element is disposed in parallel between input and output terminals of said machining discharge switching element.

4. The discharge device for a wire cut electric discharge machine in accordance with claim 1, wherein said by-pass discharge circuit comprises a serial joint of the by-pass discharge switching element and a resistant element, said serial joint having one end connected to one terminal of said capacitor and the other end connected to the other terminal of said capacitor.

5. The discharge device for a wire cut electric discharge machine in accordance with claim 1, wherein said capacitor discharge termination detecting device measures a value of current flowing in a path connecting one terminal of said capacitor and a junction point of said machining discharge switching element and said by-pass discharge switching element, generating the discharge termination signal when a current value thus measured decreases down to a predetermined value.
